# EUROPEAN PATENT SPECIFICATION

(11) **EP 3 231 909 B1**
(45) Date of publication and mention of the grant of the patent: **01.03.2023**
(21) Application number: 17166005.3
(22) Date of filing: 11.04.2017
(51) Int. Cl.: D03D 39/08

(54) **GRIPPER FOR A GRIPPER WEAVING MACHINE AND METHOD FOR MANUFACTURING SUCH A GRIPPER**
GREIFER FÜR EINE GREIFERWEBMASCHINE UND VERFAHREN ZUR HERSTELLUNG SOLCH EINES GREIFERS
PINCE POUR UN MÉTIER À TISSER À PINCE ET PROCÉDÉ DE FABRICATION D'UNE TELLE PINCE

(30) Priority: 13.04.2016 WO PCT/CN2016/079120
(43) Date of publication of application: 18.10.2017
(73) Proprietor: Vandewiele NV, 8510 Kortrijk / Marke (BE)
(72) Inventor: BRUYNOGHE, Koen, 9840 De Pinte (BE); GARNETT, Peter, Meldon, Morpeth NE61 3TN (GB)
(74) Representative: Hostens, Veerle

(56) References cited:
- EP-A2- 1 696 059
- EP-B1- 1 365 052
- GB-A- 2 428 048

## Description

The present invention relates to a gripper for a gripper weaving machine, for example an Axminster gripper weaving machine, comprising two interconnected clamping parts movable with respect to one another for clamping, the first said clamping part comprising at least two guiding recesses and the second said clamping part comprising at least two corresponding guiding tongues protruding towards the first clamping part, the guiding recesses and guiding tongues being positioned such that the guiding recesses receive the guiding tongues for sliding movement therein when the clamping parts move with respect to one another.

The present invention additionally relates to a method for manufacturing such a gripper and to the use of such a gripper in a gripper weaving machine.

Grippers for Axminster gripper weaving machines are e.g. described in GB 1 344 979 A, EP 1 696 059 A2 and EP 1 365 052 B1.

In GB 1 344 979 A and EP 1 696 059 A2, the gripper clamping parts are hingedly connected by means of a hinge joint and are provided with corresponding guiding tongues and guiding recesses for aligning the clamping parts during movement thereof. The hinge joint of such grippers is however subject to wear and tear and results in relatively high maintenance costs.

In EP 1 365 052 B1, the gripper clamping parts are interconnected by means of intermediate springy elements and are provided with staggered projections for aligning the clamping parts during movement thereof. These projections are however less suitable for aligning the clamping parts than guiding tongues and guiding recesses as in the grippers of GB 1 344 979 A and EP 1 696 059 A2.

An object of the current invention is to provide a gripper with which the mentioned disadvantages of the prior art are resolved.

This object is achieved by providing a gripper for a gripper weaving machine, for example an Axminster gripper weaving machine, comprising two interconnected clamping parts movable with respect to one another for clamping, the first said clamping part comprising at least two guiding recesses and the second said clamping part comprising at least two corresponding guiding tongues protruding towards the first clamping part, the guiding recesses and guiding tongues being positioned such that the guiding recesses receive the guiding tongues for sliding movement therein when the clamping parts move with respect to one another, wherein the gripper is made of one piece, wherein the clamping parts are interconnected by means of at least one intermediate resilient element and wherein the lengths of the guiding tongues and guiding recesses are chosen such that when the gripper is used in a gripper weaving machine, part of the guiding tongues remains retained within the respective guiding recesses when the clamping parts move with respect to one another.

Such intermediate resilient element is less prone to wear than a hinged joint.

Due to the presence, positioning and the length of the tongues and recesses, in each position of the clamping parts during its normal use, at least part of the guiding tongues is engaged in the respective guiding recesses and the movement of the clamping parts is guided by these guiding tongues and guiding recesses, such that the clamping parts remain aligned.

The at least one intermediate resilient element preferably is made as an intermediate resilient strip.

The clamping parts and the intermediate resilient element of a gripper according to the invention are preferably made of the same material. Even more preferable, the clamping parts and the intermediate resilient element are made of hardened and tempered spring steel.

The two said guiding tongues of a gripper according to the invention preferably extend laterally on opposite faces of the second clamping part, such that forces acting on the guiding tongues due to the entering of the first clamping part between the guiding tongues can at least partially compensate each other, such that this forces not fully act on the second clamping part.

In a furthermore preferred embodiment of a gripper according to the invention, the guiding tongues are staggered. The guiding recesses in the first clamping part are then also staggered, such that the first clamping part is less weakened due to the provision of the recesses therein.

The guiding tongues are furthermore preferably positioned near the ends of the clamping parts between which the pile yarn is to be clamped, as the correct alignment of the clamping parts is most crucial at those ends.

The object of the invention is also achieved by providing a method for manufacturing a gripper for a gripper weaving machine, for example an Axminster gripper weaving machine, comprising two interconnected clamping parts movable with respect to one another for clamping, the first clamping part comprising at least two guiding recesses and the second said clamping part comprising at least two corresponding guiding tongues protruding towards the first clamping part, the guiding recesses and guiding tongues being positioned such that the recesses receive the guiding tongues for sliding movement therein when the clamping parts move with respect to one another, wherein from a plate, a part is cut out, comprising the clamping parts and at least one bridge, interconnecting said clamping parts, wherein the clamping parts are provided with said guiding tongues and guiding recesses and wherein an intermediate resilient element, interconnecting said clamping parts, is cut out of this bridge.

The part cut out of the plate, comprises a second bridge, interconnecting said clamping parts near one end of the clamping parts, and a third bridge, interconnecting said clamping parts near the other end of the clamping parts, wherein the first mentioned bridge interconnects said clamping parts between both their ends, and wherein at least part of the second bridge is removed and at least part of the third bridge is removed, disconnecting the clamping parts near their ends, before the intermediate resilient element is cut out of the first bridge.

With the aid of such a second bridge and third bridge, it is easier to maintain the clamping parts in one position for further processing on the clamping parts, such as tumbling, chamfering, etc. The tension in the first bridge then also remains the same.

The first bridge is made resilient, while the second bridge and the third bridge are made rigid. The bridges can be given an adapted form to assure the first bridge is resilient and the second bridge and the third bridge are rigid.

In a preferred method according to the invention, after removal of at least part of the second bridge and at least part of the third bridge, the clamping parts are forced together in a clamping position, such that the first bridge is deformed and with the clamping parts in this clamping position, the intermediate resilient element is thereafter cut out of the first bridge.

Even more preferred, the second bridge is positioned near the ends of the clamping parts between which the pile yarn is to be clamped, and at the removal of at least part of the second bridge, teeth are cut out of the second bridge, for clamping the pile yarn between those teeth and when the clamping parts are forced together, the teeth of the clamping parts are clamped together.

In this way, it is easier to assure that the teeth match while cutting out the resilient element, such that during normal use of the gripper, the teeth will still match at clamping.

In a method according to the invention, the plate out of which the mentioned part is cut, is preferably made of hardened and tempered spring steel.

The part can e.g. be cut out of the plate by means of wire eroding or laser cutting.

After cutting the part out of the plate, the part is preferably tumbled.

The guiding tongues and guiding recesses can e.g. be formed by means of milling.

The removal of at least part of the second bridge can e.g. be done by means of wire eroding or laser cutting.

The removal of at least part of the third bridge can e.g. be done by means of wire eroding or laser cutting.

The intermediate resilient element can e.g. be cut out of the first bridge by means of wire eroding or laser cutting.

A method according to the invention is preferable used to form a gripper according to the invention.

The object of the invention is furthermore achieved with the use of a gripper according the invention in a gripper weaving machine.

The present invention will now be explained in more detail by means of the following detailed description of some embodiments of a gripper and a method according to the present invention. The aim of this description is solely to give illustrative examples and to indicate further advantages and features of the invention, and can thus not be interpreted as a limitation of the area of application of the invention or of the patent rights defined in the claims.

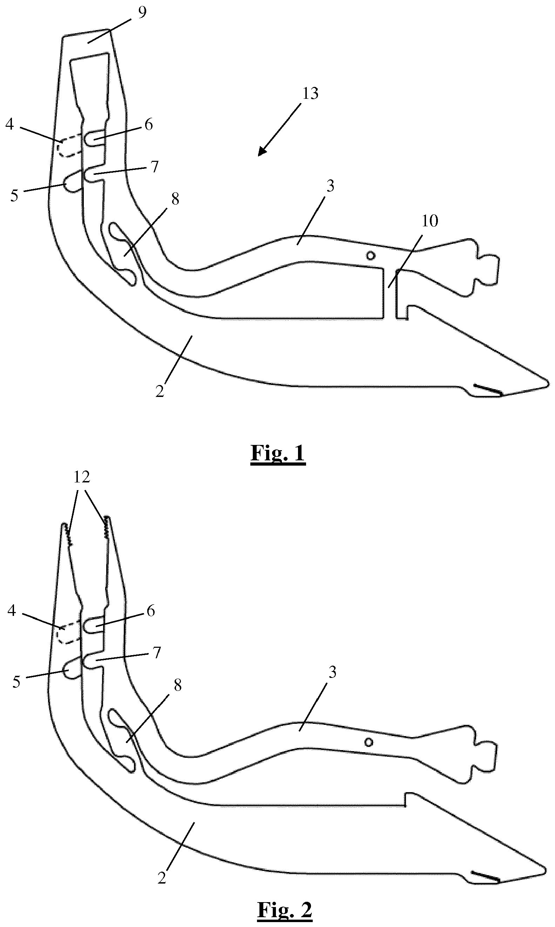

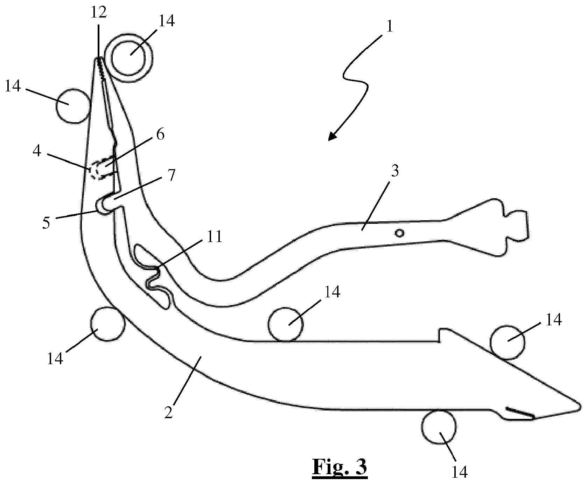

In this detailed description, reference numerals are used to refer to the attached drawings, in which
- Fig. 1 to Fig. 3 show in different front views how a gripper according to the invention can be formed, wherein Fig. 3 shows the gripper and Fig. 1 shows a part, comprising the clamping parts of this gripper with guiding tongues and guiding recesses and three bridges, interconnecting said clamping parts.

As illustrated on figure 3, the illustrated gripper (1) for a gripper weaving machine, for example an Axminster gripper weaving machine comprises two interconnected clamping parts (2, 3) which are movable with respect to one another between an open position and a closed position, wherein a pile yarn can be clamped between the clamping parts (2, 3) and can be released.

The clamping parts (2, 3) are interconnected by means of an intermediate resilient strip (11).

The first clamping part (2) of the gripper (1) is provided with two recesses (4, 5) which are staggered and positioned at opposite faces of the first clamping part (2). The second clamping part (3) of the gripper (1) comprises two guiding tongues (6, 7), which are staggered and extend on lateral sides from the second clamping part (3).

The guiding recesses (4, 5) in the first clamping part (2) and the guiding tongues (6, 7) in the second clamping part (3) are positioned such that the guiding recesses (4, 5) receive the guiding tongues (6, 7) for sliding movement therein. In this way, these guiding recesses (4, 5) and guiding tongues (6, 7) assure a correct alignment of the clamping parts (2, 3).

The lengths of the guiding tongues (6, 7) and guiding recesses (4, 5) are chosen such that in each position of the clamping parts (2, 3), when used in an Axminster gripper weaving machine at least part of the tongues (6, 7) is retained within the respective guiding recesses (4, 5).

At the ends where the pile yarn is clamped, the clamping parts (2, 3) are provided with teeth (12), such that the yarn will not get loose from the clamping parts (2, 3) when the gripper (1) takes along the pile yarn. The guiding tongues (6, 7) and guiding recesses (4, 5) are positioned near the teeth (12).

In order to form this gripper (1), first a part (13) as illustrated in figure 1 is cut out of a plate of hardened and tempered spring steel, this e.g. by means of wire eroding or laser cutting.

This part (13) comprises the clamping parts (2, 3) a first bridge (8) interconnecting said clamping parts (2, 3) centrally and a second bridge (9) and a third bridge (10) interconnecting said clamping parts (2, 3) near the ends thereof. The second bridge (9) and third bridge (10) are formed rigidly. The first bridge (8) is formed more resiliently. The guiding tongues (6, 7) and guiding recesses (4, 5) are formed by means of milling. The rounding of the clamping parts (2, 3) can also be formed by means of milling.

Then this part (13) is tumbled and chamfered.

As illustrated in figure 2, the second bridge (9) and the third bridge (10) are then at least partly removed, disconnecting the clamping parts (2, 3) near their ends, this e.g. by means of wire eroding. At removing at least part of the second bridge (9), teeth (12) are cut out. These teeth (12) are then positioned at het ends of the clamping parts (2, 3) between which the pile yarn is to be clamped, and are intended for clamping the pile yarn there between.

Thereafter, as illustrated in figure 3, the clamping parts (2, 3) are forced together e.g. by means of rollers (14), in a clamping position, wherein the teeth (12) are clamped together. The first bridge (8) is thus deformed. Thereafter, the intermediate resilient element (11) is cut out of the first bridge (8), e.g. by means of wire eroding.

## Claims

1. Gripper (1) for a gripper weaving machine, comprising two interconnected clamping parts (2, 3) movable with respect to one another for clamping, the first said clamping part (2) comprising at least two guiding recesses (4, 5) and the second said clamping part (3) comprising at least two corresponding guiding tongues (6, 7) protruding towards the first clamping part (2), the guiding recesses (4, 5) and guiding tongues (6, 7):
- being positioned such that the guiding recesses (4, 5) receive the guiding tongues (6, 7) for sliding movement therein when the clamping parts (2, 3) move with respect to one another;
- and the lengths thereof being such that when the gripper (1) is used in a gripper weaving machine, part of the guiding tongues (6, 7) remains retained within the respective guiding recesses (4, 5) when the clamping parts (2, 3) move with respect to one another,
**characterized in that** the gripper (1) is made of one piece, wherein the clamping parts (2, 3) are interconnected by means of at least one intermediate resilient element (11).

2. Gripper (1) according to claim 1, **characterized in that** the clamping parts (2, 3) and the intermediate resilient element (11) are made of the same material.

3. Gripper (1) according to claim 2, **characterized in that** the clamping parts (2, 3) and the intermediate resilient element (11) are made of hardened and tempered spring steel.

4. Gripper (1) according to any of the preceding claims, **characterized in that** the two said guiding tongues (6, 7) extend laterally on opposite faces of the said second clamping part (3).

5. Gripper (1) according to claim 4, **characterized in that** the guiding tongues (6, 7) are staggered.

6. Gripper (1) according to claim 4, **characterized in that** the guiding tongues (6, 7) are positioned near the ends of the clamping parts (2, 3).

7. Method for manufacturing a gripper (1) for a gripper weaving machine, comprising two interconnected clamping parts (2, 3) movable with respect to one another for clamping and releasing a pile yarn, the first clamping part (2) comprising at least two guiding recesses (4, 5) and the second said clamping part (3) comprising at least two corresponding guiding tongues (6, 7) protruding towards the first clamping part (2), the guiding recesses (4, 5) and guiding tongues (6, 7) being positioned such that the guiding recesses (4, 5) receive the guiding tongues (6, 7) for sliding movement therein when the clamping parts (2, 3) move with respect to one another, **characterized in that**:
- from a plate, a part (13) is cut out, comprising:
i. the clamping parts (2, 3);
ii. a first bridge (8), which is made resilient and is interconnecting said clamping parts (2, 3) between both their ends;
iii. a second bridge (9), which is made rigid and is interconnecting said clamping parts (2, 3) near one end of the clamping parts (2, 3);
iv. and a third bridge (10), which is made rigid and is interconnecting said clamping parts (2, 3) near the other end of the clamping parts (2, 3); that
- the clamping parts (2, 3) are provided with said guiding tongues (6, 7) and guiding recesses (4, 5); that
- an intermediate resilient element (11), interconnecting said clamping parts (2, 3) is cut out of said first bridge (8); and that
- before the intermediate resilient element (11) is cut out of the first bridge (8) at least part of the second bridge (9) is removed and at least part of the third bridge (10) is removed, disconnecting the clamping parts (2, 3) near their ends.

8. Method according to claim 7, **characterized in that** after removal of at least part of the second bridge (9) and at least part of the third bridge (10), the clamping parts (2, 3) are forced together in a clamping position, such that the first bridge (8) is deformed and that thereafter, with the clamping parts (2, 3) in this clamping position, the intermediate resilient element (11) is cut out of the first bridge (8).

9. Method according to claim 8, **characterized in that** the second bridge (9) is positioned near the ends of the clamping parts (2, 3) between which the pile yarn is clamped, that at the removal of at least part of the second bridge (9), teeth (12) are cut out of the second bridge (9), for clamping the pile yarn between those teeth (12) and that when the clamping parts (2, 3) are forced together, the teeth (12) of the clamping parts (2, 3) are clamped together.

10. Method according to claim 9, **characterized in that** the plate is made of hardened and tempered spring steel.

11. Method according to claim 9, **characterized in that** the part (13) is cut out of the plate, by means of wire eroding.

12. Method according to claim 9, **characterized in that** after cutting the part (13) out of the plate, the part (13) is tumbled.

13. Method according to claim 9, **characterized in that** the guiding tongues (6, 7) and guiding recesses (4, 5) are formed by means of milling.

14. Method according to claim 9, **characterized in that** the removal of at least part of the second bridge (9) is done by means of wire eroding.

15. Method according to claim 9, **characterized in that** the removal of at least part of the third bridge (10) is done by means of wire eroding.

16. Method according to claim 9, **characterized in that** the intermediate resilient element (11) is cut out of the first bridge (8) by means of wire eroding.

17. Use of a gripper (1) in a gripper weaving machine, the gripper (1) being made of one piece and comprising two interconnected clamping parts (2, 3), interconnected by means of at least one intermediate resilient element, the clamping parts (2, 3) moving with respect to one another for clamping, the first said clamping part (2) comprising at least two guiding recesses (4, 5) and the second said clamping part (3) comprising at least two corresponding guiding tongues (6, 7) protruding towards the first clamping part (2), the guiding recesses (4, 5) receiving the guiding tongues (6, 7) for sliding movement therein, wherein part of the guiding tongues (6, 7) remain retained within the respective guiding recesses (4, 5).

## Patentansprüche

1. Greifer (1) für eine Greiferwebmaschine, umfassend zwei miteinander verbundene Klemmteile (2, 3), die bezüglich einander zum Klemmen beweglich sind, wobei das erste Klemmteil (2) mindestens zwei Führungsausnehmungen (4, 5) umfasst und das zweite Klemmteil (3) mindestens zwei passende Führungszungen (6, 7), die zum ersten Klemmteil (2) ragen, umfasst, wobei die Führungsausnehmungen (4, 5) und die Führungszungen (6, 7) :
- derart positioniert sind, dass die Führungsausnehmungen (4, 5) die Führungszungen (6, 7) für eine Schiebebewegung darin, wenn sich die Klemmteile (2, 3) in Bezug zueinander bewegen, aufnehmen;
- und deren Längen derart ausgestaltet sind, dass, wenn der Greifer (1) in einer Greiferwebmaschine verwendet wird, ein Teil der Führungszungen (6, 7) innerhalb der jeweiligen Führungsausnehmungen (4, 5) gehalten wird, wenn sich die Klemmteile (2, 3) in Bezug zueinander bewegen,
**dadurch gekennzeichnet, dass** der Greifer (1) aus einemStück gefertigt ist, während die Klemmteile (2, 3) mittels mindestens eines elastischen Zwischenelements (11) miteinander verbunden sind.

2. Greifer (1) nach Anspruch 1, **dadurch gekennzeichnet, dass** die Klemmteile (2, 3) und das elastische Zwischenelement (11) aus demselben Material gefertigt sind.

3. Greifer (1) nach Anspruch 2, **dadurch gekennzeichnet, dass** die Klemmteile (2, 3) und das elastische Zwischenelement (11) aus gehärtetem und vergütetem Federstahl gefertigt sind.

4. Greifer (1) nach einem der vorstehenden Ansprüche, **dadurch gekennzeichnet, dass** sich die zwei Führungszungen (6, 7) seitlich auf entgegengesetzten Seiten des zweiten Klemmteils (3) erstrecken.

5. Greifer (1) nach Anspruch 4, **dadurch gekennzeichnet, dass** die Führungszungen (6, 7) versetzt sind.

6. Greifer (1) nach Anspruch 4, **dadurch gekennzeichnet, dass** die Führungszungen (6, 7) in der Nähe der Enden der Klemmteile (2, 3) positioniert sind.

7. Verfahren zur Herstellung eines Greifers (1) für eine Greiferwebmaschine, umfassend zwei miteinander verbundene Klemmteile (2, 3), die bezüglich einander zum Klemmen und Freigeben eines Polgarns beweglich sind, wobei das erste Klemmteil (2) mindestens zwei Führungsausnehmungen (4, 5) umfasst und das zweite Klemmteil (3) mindestens zwei passende Führungszungen (6, 7), die zum ersten Klemmteil (2) ragen, umfasst, wobei die Führungsausnehmungen (4, 5) und die Führungszungen (6, 7) derart positioniert sind, dass die Führungsausnehmungen (4, 5) die Führungszungen (6, 7) für eine Schiebebewegung darin, wenn sich die Klemmteile (2, 3) bezüglich einander bewegen, aufnehmen; **dadurch gekennzeichnet, dass:**
- aus einer Platte ein Teil (13) ausgeschnitten wird, Folgendes umfassend:
i. die Klemmteile (2, 3);
ii. eine erste Brücke (8), die elastisch hergestellt ist und die Klemmteile (2, 3) zwischen ihren beiden Enden miteinander verbindet;
iii. eine zweite Brücke (9), die starr hergestellt ist und die Klemmteile (2, 3) in der Nähe eines Endes der Klemmteile (2, 3) miteinander verbindet;
iv. und eine dritte Brücke (10), die starr hergestellt ist und die Klemmteile (2, 3) in der Nähe des anderen Endes der Klemmteile (2, 3) miteinander verbindet; dass
- die Klemmteile (2, 3) mit den Führungszungen (6, 7) und Führungsausnehmungen (4, 5) versehen sind; dass
- ein elastisches Zwischenelement (11), das die Klemmteile (2, 3) miteinander verbindet, aus der ersten Brücke (8) ausgeschnitten wird; und dass
- bevor das elastische Zwischenelement (11) aus der ersten Brücke (8) ausgeschnitten wird, zumindest ein Teil der zweiten Brücke (9) entfernt wird und zumindest ein Teil der dritten Brücke (10) entfernt wird, wodurch die Klemmteile (2, 3) in der Nähe ihrer Enden voneinander getrennt werden.

8. Verfahren nach Anspruch 7, **dadurch gekennzeichnet, dass** nach dem Entfernen zumindest eines Teils der zweiten Brücke (9) und zumindest eines Teils der dritten Brücke (10) die Klemmteile (2, 3) in eine Klemmposition zusammengedrückt werden, sodass die erste Brücke (8) verformt wird und dass anschließend, mit den Klemmteilen (2, 3) in dieser Klemmposition, das elastische Zwischenelement (11) aus der ersten Brücke (8) ausgeschnitten wird.

9. Verfahren nach Anspruch 8, **dadurch gekennzeichnet, dass** die zweite Brücke (9) in der Nähe der Enden der Klemmteile (2, 3) positioniert ist, zwischen denen das Polgarn geklemmt ist, dass beim Entfernen zumindest eines Teils der zweiten Brücke (9) Zähne (12) aus der zweiten Brücke (9) ausgeschnitten werden, um das Polgarn zwischen diesen Zähnen (12) zu klemmen, und dass, wenn die Klemmteile (2, 3) zusammengedrückt werden, die Zähne (12) der Klemmteile (2, 3) zusammengeklemmt werden.

10. Verfahren nach Anspruch 9, **dadurch gekennzeichnet, dass** die Platte aus gehärtetem und vergütetem Federstahl besteht.

11. Verfahren nach Anspruch 9, **dadurch gekennzeichnet, dass** das Teil (13) mittels Drahterodierens aus der Platte ausgeschnitten wird.

12. Verfahren nach Anspruch 9, **dadurch gekennzeichnet, dass** nach dem Ausschneiden des Teils (13) aus der Platte, das Teil (13) getrommelt wird.

13. Verfahren nach Anspruch 9, **dadurch gekennzeichnet, dass** die Führungszungen (6, 7) und Führungsausnehmungen (4, 5) mittels Fräsens ausgebildet sind.

14. Verfahren nach Anspruch 9, **dadurch gekennzeichnet, dass** das Entfernen zumindest eines Teils der zweiten Brücke (9) mittels Drahterodierens erfolgt.

15. Verfahren nach Anspruch 9, **dadurch gekennzeichnet, dass** das Entfernen zumindest eines Teils der dritten Brücke (10) mittels Drahterodierens erfolgt.

16. Verfahren nach Anspruch 9, **dadurch gekennzeichnet, dass** das elastische Zwischenelement (11) mittels Drahterodierens aus der ersten Brücke (8) ausgeschnitten wird.

17. Verwendung eines Greifers (1) in einer Greiferwebmaschine, wobei der Greifer (1) aus einem Stück gefertigt ist und zwei miteinander verbundene Klemmteile (2, 3) umfasst, die mittels mindestens eines elastischen Zwischenelements miteinander verbunden sind, wobei sich die Klemmteile (2, 3) zum Klemmen bezüglich einander bewegen, wobei das erste Klemmteil (2) mindestens zwei Führungsausnehmungen (4, 5) umfasst und das zweite Klemmteil (3) mindestens zwei passende Führungszungen (6, 7), die zum ersten Klemmteil (2) ragen, umfasst, wobei die Führungsausnehmungen (4, 5) die Führungszungen (6, 7) für eine Schiebebewegung darin aufnehmen, wobei ein Teil der Führungszungen (6, 7) innerhalb der jeweiligen Führungsausnehmungen (4, 5) gehalten wird.

## Revendications

1. Griffe (1) pour une machine à tisser à griffes, comprenant deux parties de serrage interconnectées (2, 3), déplaçables l'une par rapport à l'autre pour serrer, ladite première (2) partie de serrage comprenant au moins deux évidements de guidage (4, 5) et ladite seconde (3) partie de serrage comprenant au moins deux languettes de guidage (6, 7) correspondantes en saillie en direction de la première partie de serrage (2), les évidements de guidage (4, 5) et les languettes de guidage (6, 7) :
- étant positionnés de telle sorte que les évidements de guidage (4, 5) reçoivent les languettes de guidage (6, 7) pour exécuter un déplacement glissant dans ceux-ci lorsque les parties de serrage (2, 3) se déplacent l'une par rapport à l'autre ;
- et leurs longueurs étant telles que, lorsque la griffe (1) est utilisée dans une machine à tisser à griffes, une partie des languettes de guidage (6, 7) reste retenue à l'intérieur des évidements de guidage (4, 5) respectifs lorsque les parties de serrage (2, 3) se déplacent l'une par rapport à l'autre,
**caractérisée en ce que** la griffe (1) est faite en une seule pièce, les parties de serrage (2, 3) étant interconnectées au moyen d'au moins un élément élastique intermédiaire (11).

2. Griffe (1) selon la revendication 1, **caractérisée en ce que** les parties de serrage (2, 3) et l'élément élastique intermédiaire (11) sont faits du même matériau.

3. Griffe (1) selon la revendication 2, **caractérisée en ce que** les parties de serrage (2, 3) et l'élément élastique intermédiaire (11) sont faits d'acier à ressort trempé et revenu.

4. Griffe (1) selon l'une quelconque des revendications précédentes, **caractérisée en ce que** lesdites deux languettes de guidage (6, 7) s'étendent latéralement sur les faces opposées de ladite seconde partie de serrage (3) .

5. Griffe (1) selon la revendication 4, **caractérisée en ce que** les languettes de guidage (6, 7) sont mutuellement décalées.

6. Griffe (1) selon la revendication 4, **caractérisée en ce que** les languettes de guidage (6, 7) sont positionnées à proximité des extrémités des parties de serrage (2, 3).

7. Procédé de fabrication d'une griffe(1) pour une machine à tisser à griffes, comprenant deux parties de serrage interconnectées (2, 3), déplaçables l'une par rapport à l'autre pour serrer et relâcher un fil de poil, la première partie de serrage (2) comprenant au moins deux évidements de guidage (4, 5) et ladite seconde (3) partie de serrage comprenant au moins deux languettes de guidage (6, 7) correspondantes en saillie en direction de la première partie de serrage (2), les évidements de guidage (4, 5) et les languettes de guidage (6, 7) étant positionnés de telle sorte que les évidements de guidage (4, 5) reçoivent les languettes de guidage (6, 7) pour exécuter un déplacement glissant dans ceux-ci lorsque les parties de serrage (2, 3) se déplacent l'une par rapport à l'autre, **caractérisé en ce que** :
- dans une plaque, une partie (13) est découpée, comprenant :
i. les parties de serrage (2, 3) ;
ii. un premier pont (8), qui est fait de façon à être élastique et interconnecte lesdites parties de serrage (2, 3) entre leurs deux extrémités ;
iii. un deuxième pont (9), qui est fait de façon à être rigide et interconnecte lesdites parties de serrage (2, 3) à proximité d'une extrémité des parties de serrage (2, 3) ;
iv. et un troisième pont (10), qui est fait de façon à être rigide et interconnecte lesdites parties de serrage (2, 3) à proximité de l'autre extrémité des parties de serrage (2, 3) ; **en ce que**
- les parties de serrage (2, 3) sont pourvues desdites languettes de guidage (6, 7) et desdits évidements de guidage (4, 5) ; **en ce que**
- un élément élastique intermédiaire (11) interconnectant lesdites parties de serrage (2, 3) est découpé dudit premier pont (8) ; et **en ce que**
- avant que l'élément élastique intermédiaire (11) soit découpé du premier pont (8), au moins une partie du deuxième pont (9) est enlevée et au moins une partie du troisième pont (10) est enlevée, de sorte que les parties de serrage (2, 3) sont séparées à proximité de leurs extrémités.

8. Procédé selon la revendication 7, **caractérisé en ce qu'**après l'enlèvement d'au moins une partie du deuxième pont (9) et d'au moins une partie du troisième pont (10), les parties de serrage (2, 3) sont rapprochées l'une de l'autre de manière forcée jusqu'à une position de serrage, de telle sorte que le premier pont (8) est déformé et **en ce que**, avec les parties de serrage (2, 3) dans cette position de serrage, l'élément élastique intermédiaire (11) est ensuite découpé du premier pont (8).

9. Procédé selon la revendication 8, **caractérisé en ce que** le deuxième pont (9) est positionné à proximité des extrémités des parties de serrage (2, 3) entre lesquelles le fil de poil est serré, **en ce que**, lors de l'enlèvement d'au moins une partie du deuxième pont (9), des dents (12) sont découpées dans le deuxième pont (9), pour serrer le fil de poil entre ces dents (12) et **en ce que**, lorsque les parties de serrage (2, 3) sont rapprochées l'une de l'autre de manière forcée, les dents (12) des parties de serrage (2, 3) sont serrées les unes contre les autres.

10. Procédé selon la revendication 9, **caractérisé en ce que** la plaque est faite d'acier à ressort trempé et revenu.

11. Procédé selon la revendication 9, **caractérisé en ce que** la partie (13) est découpée dans la plaque par électroérosion à fil.

12. Procédé selon la revendication 9, **caractérisé en ce qu'**après avoir découpé la partie (13) dans la plaque, la partie (13) est polie au tonneau.

13. Procédé selon la revendication 9, **caractérisé en ce que** les languettes de guidage (6, 7) et les évidements de guidage (4, 5) sont formés par fraisage.

14. Procédé selon la revendication 9, **caractérisé en ce que** l'enlèvement d'au moins une partie du deuxième pont (9) est réalisé par électroérosion à fil.

15. Procédé selon la revendication 9, **caractérisé en ce que** l'enlèvement d'au moins une partie du troisième pont (10) est réalisé par électroérosion à fil.

16. Procédé selon la revendication 9, **caractérisé en ce que** l'élément élastique intermédiaire (11) est découpé du premier pont (8) par électroérosion à fil.

17. Utilisation d'une griffe (1) dans une machine à tisser à griffes, la griffe (1) étant faite en une seule pièce et comprenant deux parties de serrage interconnectées (2, 3), qui sont interconnectées au moyen d'au moins un élément élastique intermédiaire, les parties de serrage (2, 3) se déplaçant l'une par rapport à l'autre pour serrer, ladite première partie de serrage (2) comprenant au moins deux évidements de guidage (4, 5) et ladite seconde partie de serrage (3) comprenant au moins deux languettes de guidage (6, 7) correspondantes en saillie en direction de la première partie de serrage (2), les évidements de guidage (4, 5) recevant les languettes de guidage (6, 7) pour exécuter un déplacement glissant dans ceux-ci, une partie des languettes de guidage (6, 7) restant retenue à l'intérieur des évidements de guidage (4, 5) respectifs.
